(19) Europäisches Patentamt
European Patent Office
Office européen des brevets

(11) **EP 4 617 160 A1**

(12) **EUROPEAN PATENT APPLICATION**
published in accordance with Art. 153(4) EPC

(43) Date of publication:
**17.09.2025 Bulletin 2025/38**

(21) Application number: **23888286.4**

(22) Date of filing: **20.07.2023**

(51) International Patent Classification (IPC):
***B62L 3/08*** *(2006.01)*     ***B60T 7/12*** *(2006.01)*
***B60T 8/17*** *(2006.01)*

(52) Cooperative Patent Classification (CPC):
**B60T 7/12; B60T 8/17; B62L 3/08**

(86) International application number:
**PCT/JP2023/026514**

(87) International publication number:
**WO 2024/100931 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 JP 2022178485**

(71) Applicant: **Astemo, Ltd.**
**Chiyoda-ku,**
**Tokyo 1000004 (JP)**

(72) Inventors:
• **ATSUTA, Daiki**
**Hitachinaka-shi, Ibaraki 312-8503 (JP)**
• **YAMAOKA, Takumi**
**Hitachinaka-shi, Ibaraki 312-8503 (JP)**
• **TSUDA, Fumiya**
**Hitachinaka-shi, Ibaraki 312-8503 (JP)**

(74) Representative: **Plougmann Vingtoft a/s**
**Strandvejen 70**
**2900 Hellerup (DK)**

(54) **VEHICLE BRAKE CONTROL DEVICE**

(57) A vehicle brake control apparatus includes: a first brake operating member configured to operate a first brake for braking a first wheel; a second brake operating member configured to operate a second brake for braking a second wheel; a first detection device configured to detect a first operation amount that varies according to an operation of the first brake operating member; an external environment information acquisition device configured to acquire external environment information on surroundings of a vehicle; and a controller. When the first operation amount is equal to or greater than a first threshold, the controller is configured to execute braking force control of controlling a braking force of the second brake based on the first operation amount, and automatic deceleration control of decelerating the vehicle based on a required deceleration of the vehicle set based on the external environment information and a vehicle deceleration obtained by detection or calculation. The controller executes the automatic deceleration control (S51) on condition that the braking force control is not being executed (S42: No).

**FIG.4**

AUTOMATIC BRAKE FLAG SETTING PROCESSING START

S41 VEHICLE BODY STANDS UPRIGHT? — No

S42 Yes BRAKING FORCE CONTROL BEING EXECUTED? — Yes

S43 No FRONT BRAKE LEVER OPERATED? — Yes

No

S49 PRECEDING AUTOMATIC BRAKING? — Yes / No

S44 WARNING FLAG High IS ON? — No

S45 Yes ACCELERATOR OPERATION AMOUNT IS EQUAL TO OR GREATER THAN THRESHOLD? — Yes

S46 No VEHICLE BODY VELOCITY IS EQUAL TO OR GREATER THAN PREDETERMINED VALUE? — No

S50 Yes PRECEDING AUTOMATIC BRAKING? — Yes / No

S47 Yes FI CUT REQUEST

S48 CERTAIN PERIOD OF TIME ELAPSES? — No

S53 TURN OFF AUTOMATIC BRAKE FLAG

S51 Yes AUTOMATIC BRAKE FLAG ON

S54 STOP FI CUT REQUEST

END

EP 4 617 160 A1

## Description

Technical Field

The present invention relates to a vehicle brake control apparatus.

Background Art

In the related art, there has been known a vehicle brake control apparatus that executes automatic deceleration control of automatically decelerating a vehicle based on a distance from a motorcycle to an obstacle ahead (see PTLs 1 and 2). Further, in the related art, as the vehicle brake control apparatus, there has been known an apparatus that includes a hydraulic front wheel brake, a mechanical rear wheel brake, and a rear wheel brake lever for operating the rear wheel brake, and executes braking force control of controlling a braking force of the front wheel brake based on an operation amount of the rear wheel brake lever (see PTLs 3 and 4).

Citation List

Patent Literature

   PTL 1: JP6817417B
   PTL 2: JP6850863B
   PTL 3: WO2020/026678
   PTL 4: WO2022/025095

Summary of Invention

In a case where the vehicle brake control apparatus capable of executing the braking force control has a function of the automatic deceleration control described above, if the braking force control and the automatic deceleration control are simultaneously performed, the automatic deceleration control may be affected by the braking force control.

Therefore, an object of the invention is to appropriately decelerate a vehicle by automatic deceleration control that is not affected by braking force control.

In order to solve the problem, a vehicle brake control apparatus according to the invention includes: a first brake operating member configured to operate a first brake for braking a first wheel; a second brake operating member configured to operate a second brake for braking a second wheel; a first detection device configured to detect a first operation amount that varies according to an operation of the first brake operating member; an external environment information acquisition device configured to acquire external environment information on surroundings of a vehicle; and a controller.

When the first operation amount is equal to or greater than a first threshold, the controller is configured to execute braking force control of controlling a braking force of the second brake based on the first operation amount, and automatic deceleration control of decelerating the vehicle based on a required deceleration of the vehicle set based on the external environment information and a vehicle deceleration obtained by detection or calculation.

The controller executes the automatic deceleration control on condition that the braking force control is not being executed.

According to this configuration, since the automatic deceleration control is executed when the braking force control is not being executed, the vehicle can be appropriately decelerated by the automatic deceleration control that is not affected by the braking force control.

The controller may further determine whether the second brake operating member is operated, and execute the automatic deceleration control when it is determined that the second brake operating member is not operated.

According to this configuration, in addition to the case where the braking force control is not being executed, the automatic deceleration control is executed in a case where it is determined whether the second brake operating member is operated and it is determined that the second brake operating member is not operated. Thus, the vehicle can be appropriately decelerated by the automatic deceleration control that is not affected by the operation of the second brake operating member and the braking force control.

The controller may calculate the vehicle deceleration based on a wheel speed.

According to this configuration, the vehicle deceleration can be calculated from the wheel speed detected by a wheel speed sensor, a global positioning system (GPS), or the like.

The controller may calculate a distance between an obstacle in front of the vehicle and the vehicle and a relative speed, which is a speed of the vehicle with respect to the obstacle, based on the external environment information, and execute the automatic deceleration control on condition that a first condition that the distance is equal to or less than a first distance threshold and an absolute value of the relative speed is equal to or greater than a first speed threshold is satisfied.

According to this configuration, the automatic deceleration control can be appropriately executed based on the distance and the relative speed.

The vehicle brake control apparatus may further include a notification device configured to perform notification of prompting a driver to perform an operation of decelerating the vehicle. The controller may execute the notification by the notification device on condition that a second condition that the distance is equal to or less than a second distance threshold, which is greater than the first distance threshold, and the absolute value of the relative speed is equal to or greater than a second speed threshold is satisfied.

According to this configuration, since the notification to the driver and the automatic deceleration control are performed stepwise, the vehicle can be decelerated and stopped comfortably and safely by the driver and the vehicle brake control apparatus.

When the first condition is satisfied, before executing the automatic deceleration control, the controller may output a request for decelerating the vehicle to a drive source for causing the vehicle to travel.

According to this configuration, when the first condition is satisfied, since the deceleration of the vehicle by the drive source is performed before executing the automatic deceleration control, it is easy to quickly decelerate the vehicle.

The vehicle brake control apparatus may further include a vehicle state detection device configured to measure a state of the vehicle including a posture of the vehicle. The controller may limit a deceleration of the vehicle in the automatic deceleration control based on the state of the vehicle detected by the vehicle state detection device.

According to this configuration, for example, when the state of the vehicle detected by the vehicle state detection device is unstable such as a state in which a rear lift is about to occur, the controller limits the deceleration of the vehicle in the automatic deceleration control, and thus it is possible to restrict the vehicle from becoming unstable.

The notification device may display the distance and emit light for warning.

The first brake may be a mechanical brake mechanically connected to the first brake operating member, and the second brake may be a hydraulic brake that generates a braking force by a hydraulic pressure.

According to this configuration, since the first brake is a mechanical brake, for example, the number of components of the vehicle brake control apparatus can be reduced and the vehicle brake control apparatus can be miniaturized, as compared with a structure in which both the first brake and the second brake are hydraulic brakes.

Brief Description of Drawings

[FIG. 1] FIG. 1 is a diagram illustrating a configuration of a bar-handle vehicle including a vehicle brake control apparatus according to an embodiment.
[FIG. 2] FIG. 2 is a flowchart illustrating operations of a controller.
[FIG. 3] FIG. 3 is a flowchart illustrating warning flag setting processing.
[FIG. 4] FIG. 4 is a flowchart illustrating automatic brake flag setting processing.
[FIG. 5] FIG. 5 is a flowchart illustrating output adjustment processing.
[FIG. 6] FIG. 6 is a map illustrating a relationship between a vehicle body velocity, a first distance threshold, and a second distance threshold.

Description of Embodiments

Hereinafter, an embodiment will be described in detail with reference to the drawings as appropriate.

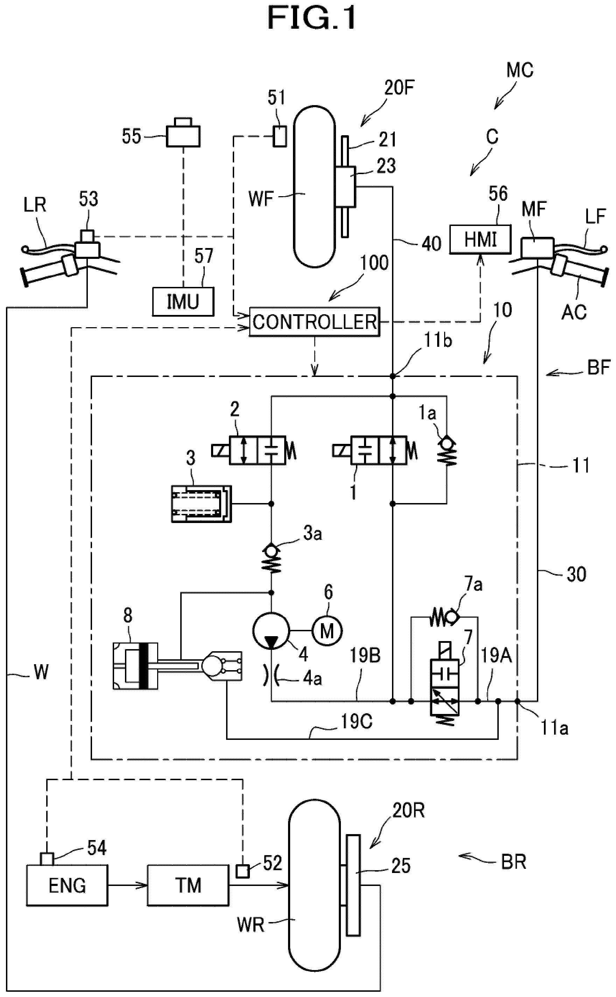

As illustrated in FIG. 1, a motorcycle MC that is a bar-handle vehicle includes a rear wheel WR as an example of a first wheel, a front wheel WF as an example of a second wheel, an engine ENG, a transmission TM, and a vehicle brake control apparatus C.

The engine ENG is a drive source configured to cause the motorcycle MC to travel. The engine ENG is coupled to the rear wheel WR via the transmission TM. That is, in the motorcycle MC of the embodiment, the rear wheel WR is a driving wheel and the front wheel WF is a driven wheel. The engine ENG is provided with a throttle sensor 54 that detects an opening degree of a throttle valve of the engine ENG. The opening degree of the throttle valve increases as an operation amount of an accelerator AC increases. The transmission TM is a mechanism that changes a driving force of the engine ENG and transmits the driving force to the rear wheel WR. A speed detection sensor 52 is provided near an output shaft of the transmission TM.

The speed detection sensor 52 is a sensor (a so-called speedometer sensor) that detects a wheel speed of the rear wheel WR, and detects a wheel speed corresponding to a speed displayed by a speedometer (not illustrated). The speed detection sensor 52 has a different detection mode from a wheel speed sensor 51 that detects a wheel speed of the front wheel WF. The wheel speed sensor 51 is a sensor that generates a pulse wave as the wheel rotates.

The vehicle brake control apparatus C includes a brake system BF of the front wheel WF, a brake system BR of the rear wheel WR, an angle sensor 53 as an example of a first detection device, a camera 55 as an example of an external environment information acquisition device, an HMI 56 as an example of a notification device, an IMU 57 as an example of a vehicle state detection device, and a controller 100.

The brake system BF mainly includes a front brake lever LF as an example of a second brake operating member, a master cylinder MF, a hydraulic pressure unit 10, a front brake 20F as an example of a second brake, a pipe 30 connecting the master cylinder MF and an input port 11a of the hydraulic pressure unit 10, and a pipe 40 connecting an output port 11b of the hydraulic pressure unit 10 and the front brake 20F.

The front brake lever LF is an operating lever for operating the front brake 20F, is disposed on the right side of a handlebar of the motorcycle MC, and can be operated by a driver's right hand. The front brake lever LF is connected to the front brake 20F via the master cylinder MF, the pipe 30, the hydraulic pressure unit 10, and the pipe 40.

The master cylinder MF is a device that outputs a hydraulic pressure corresponding to an operation amount of the front brake lever LF.

The front brake 20F is a brake that brakes the front wheel WF. The front brake 20F is a hydraulic brake that generates a braking force by a hydraulic pressure. The front brake 20F mainly includes a brake rotor 21, a brake pad (not illustrated), and a wheel cylinder 23 that generates a brake force (braking force) by pushing the brake pad against the brake rotor 21 by a hydraulic pressure output from the master cylinder MF.

The hydraulic pressure unit 10 is a unit configured to generate a braking force of the front brake 20F by applying a hydraulic pressure to the front brake 20F. The hydraulic pressure unit 10 is implemented by disposing various solenoid valves and the like on a pump body 11 that is a base body having a fluid line (a hydraulic pressure line) through which a brake fluid flows. In a normal state, a continuous fluid line runs from the input port 11a to the output port 11b of the pump body 11, so that the hydraulic pressure output from the master cylinder MF is transmitted to the front brake 20F.

On a hydraulic pressure line connecting the input port 11a and the output port 11b, a pressure regulator 7 is provided that changes the hydraulic pressure applied to the front brake 20F in accordance with a command current value output from the controller 100. The pressure regulator 7 is a normally open proportional solenoid valve, and is capable of adjusting a difference between a hydraulic pressure upstream and a hydraulic pressure downstream in accordance with the command current value. Specifically, the pressure regulator 7 increases the difference between the hydraulic pressure upstream and the hydraulic pressure downstream of the pressure regulator 7 as a magnitude of the command current value increases. At the pressure regulator 7, a check valve 7a is provided in parallel thereto that allows only a flow to an output port 11b side.

An inlet valve 1, which is a normally open solenoid valve, is disposed on a hydraulic pressure line between the pressure regulator 7 and the output port 11b. At the inlet valve 1, a check valve 1a is provided, in parallel to the inlet valve, to allow flow only to a pressure regulator 7 side.

A reflux hydraulic pressure line 19B connected to a hydraulic pressure line between the pressure regulator 7 and the inlet valve 1 is provided from a hydraulic pressure line between the output port 11b and the inlet valve 1 via an outlet valve 2 formed of a normally closed solenoid valve.

A reservoir 3 for temporarily absorbing a surplus brake fluid, a check valve 3a, a pump 4, and an orifice 4a are arranged in this order from an outlet valve 2 side on the reflux hydraulic pressure line 19B. The check valve 3a is disposed so as to allow only a flow to the hydraulic pressure line between the pressure regulator 7 and the inlet valve 1. The pump 4 is driven by a motor 6, and is provided to generate a pressure toward the hydraulic pressure line between the pressure regulator 7 and the inlet valve 1. The orifice 4a attenuates pulsation of the pressure of the brake fluid discharged from the pump 4 and pulsation generated by operation of the pressure regulator 7.

An introduction hydraulic pressure line 19A, which connects the input port 11a and the pressure regulator 7, and a portion between the check valve 3a and the pump 4 in the reflux hydraulic pressure line 19B are connected by a suction hydraulic pressure line 19C. A mechanical suction valve 8 is provided in the suction hydraulic pressure line 19C.

The suction valve 8 switches between a state of opening the suction hydraulic pressure line 19C and a state of blocking the suction hydraulic pressure line 19C. The suction valve 8 is normally closed, and is opened by a difference between a hydraulic pressure of a hydraulic fluid on a master cylinder MF side and a hydraulic pressure of a hydraulic fluid on a suction port side of the pump 4 that is a vacuum pressure by operation of the pump 4.

In the hydraulic pressure unit 10 configured as described above, in a normal state, each solenoid valve is not energized, and a brake hydraulic pressure introduced from the input port 11a is output to the output port 11b through the pressure regulator 7 and the inlet valve 1, and is applied to the front brake 20F as it is. When reducing an excessive brake hydraulic pressure of the front brake 20F, for example, when performing anti-locking braking control, the inlet valve 1 is closed and the outlet valve 2 is opened to allow the brake fluid to flow to the reservoir 3 through the reflux hydraulic pressure line 19B, so that the brake fluid of the front brake 20F can be drained. When performing pressure increase of the front brake 20F by the pump 4, the suction valve 8 is opened by driving the motor 6, and the brake fluid can be actively supplied to the front brake 20F by an increased pressure of the pump 4. Further, when it is desired to adjust the degree of the pressure increase of the front brake 20F, the adjustment can be performed by adjusting a current flowing through the pressure regulator 7.

The brake system BR mainly includes a rear brake lever LR as an example of a first brake operating member, the angle sensor 53, a rear brake 20R as an example of a first brake, and a wire W connecting the rear brake lever LR and the rear brake 20R.

The rear brake lever LR is an operating lever for operating the rear brake 20R, is disposed on the left side of the handlebar of the motorcycle MC, and can be operated by the driver's left hand. The rear brake lever LR is mechanically connected to the rear brake 20R via the wire W.

The angle sensor 53 is a sensor configured to detect an operation angle of the rear brake lever LR as an example of a first operation amount. The operation angle of the rear brake lever LR varies according to the operation of the rear brake lever LR.

A second angle sensor 58 is a sensor configured to detect an operation angle of the front brake lever

LF as an example of a second operation amount. The operation angle of the front brake lever LF varies according to the operation of the front brake lever LF. Whether the front brake lever LF is operated can be determined by detecting a variation in the operation angle of the front brake lever LF.

The rear brake 20R is a brake that brakes the rear wheel WR, and is a mechanical brake that operates when a force generated at the time the rear brake lever LR is gripped is transmitted via the wire W. The rear brake 20R cannot be operated by the front brake lever LF. The rear brake 20R is, for example, a drum brake, and includes a drum 25, a brake shoe (not illustrated), and a return spring (not illustrated).

The drum 25 is rotatable integrally with the rear wheel WR. The brake shoe is rotatable between a contact position where the brake shoe comes into contact with an inner peripheral surface of the drum 25 and a separation position where the brake shoe is separated from the inner peripheral surface of the drum 25. The return spring biases the brake shoe from the contact position to the separation position. When the driver grips the rear brake lever LR, the wire W is pulled by the rear brake lever LR, whereby the brake shoe rotates from the separation position toward the contact position against a biasing force of the return spring.

The camera 55 is a device that acquires external environment information on surroundings of the motorcycle MC. The camera 55 captures an image of the front of the motorcycle MC and outputs captured image information to the controller 100 as external environment information.

The HMI 56 is a "human machine interface", and is a device configured to perform notification of prompting the driver to perform an operation of decelerating the motorcycle MC. The HMI 56 includes a monitor capable of displaying a distance from the motorcycle MC to an obstacle in front of the motorcycle MC, and a lamp capable of emitting light for warning.

The IMU 57 is an "inertial measurement unit" and is a device that measures a state of the motorcycle MC including a posture of the motorcycle MC. In order to detect a three-dimensional inertial motion (a translational motion and a rotational motion in three axial directions), the IMU 57 includes an acceleration sensor that detects a translational motion and an angular velocity sensor that detects a rotational motion. The IMU 57 outputs detected information to the controller 100.

The controller 100 includes, for example, a central processing unit (CPU), a random access memory (RAM), a read only memory (ROM), and an input and output circuit. The controller 100 controls the hydraulic pressure unit 10 by performing various types of calculation processing based on inputs from the wheel speed sensor 51, the speed detection sensor 52, the angle sensor 53, the throttle sensor 54, the camera 55 and the IMU 57, and programs, data, and the like stored in the ROM.

The controller 100 can execute braking force control and automatic deceleration control.

The braking force control is control of controlling the braking force of the front brake 20F based on an operation angle $\theta$ of the rear brake lever LR when the operation angle $\theta$ is equal to or greater than a first threshold $\theta$th.

Specifically, the controller 100 drives the motor 6 and controls the pressure regulator 7 to execute the braking force control. The controller 100 calculates a command current value to be output to the pressure regulator 7 based on the operation angle $\theta$ and an actual vehicle body deceleration (hereinafter, also referred to as an "actual deceleration Dr"). Here, the actual deceleration Dr can be calculated based on, for example, the wheel speed acquired from the wheel speed sensor 51. The controller 100 increases the command current value as the operation angle $\theta$ increases, and increases the command current value as a magnitude of the actual deceleration Dr decreases.

The automatic deceleration control is control of decelerating the motorcycle MC based on the actual deceleration Dr and a required deceleration Dc of the motorcycle MC set based on the image information acquired from the camera 55. The controller 100 executes the automatic deceleration control on condition that the braking force control is not being executed.

The controller 100 has a function of calculating a distance D between an obstacle in front of the motorcycle MC and the motorcycle MC and a relative speed VD, which is a speed of the motorcycle MC with respect to the obstacle, based on the image information acquired from the camera 55. The controller 100 executes the automatic deceleration control on condition that a first condition that the distance D is equal to or less than a first distance threshold Dth1 and an absolute value of the relative speed VD is equal to or greater than a first speed threshold is satisfied.

In the embodiment, the controller 100 calculates the relative speed VD by subtracting a speed of the motorcycle MC from a speed of the obstacle ahead. Therefore, when the motorcycle MC approaches the obstacle ahead, the relative speed VD is calculated to be a negative value. The controller 100 determines whether the absolute value of the relative speed VD is equal to or greater than the first speed threshold (a positive value) by determining whether the relative speed VD is equal to or less than a speed threshold VDth that is a negative value.

The controller 100 performs the notification by the HMI 56 on condition that a second condition that the distance D is equal to or less than a second distance threshold Dth2 greater than the first distance threshold Dth1 and the absolute value of the relative speed VD is equal to or greater than a second speed threshold is satisfied. In the embodiment, the first speed threshold and the second speed threshold are set to the same value. Therefore, the controller 100 also determines whether the absolute value of the relative speed VD is equal to or greater than the second speed threshold (a positive value) by determining whether the relative speed VD is equal to or less than the speed threshold VDth.

The controller 100 has a function of setting the first distance threshold Dth1 and the second distance threshold Dth2 based on the vehicle body velocity. The vehicle body velocity can be calculated based on, for example, the wheel speed acquired from the wheel speed sensor 51.

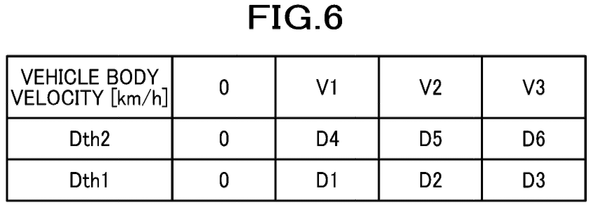

Specifically, the controller 100 stores a map illustrated in FIG. 6. The map is a map illustrating a relationship between the vehicle body velocity (V1, V2, V3, where V1 < V2 < V3), the first distance threshold Dth1, and the second distance threshold Dth2. In the map, a relationship between magnitudes of values D1, D2, and D3 is D1 < D2 < D3, and a relationship between magnitudes of values D4, D5, and D6 is D4 < D5 < D6.

That is, the first distance threshold Dth1 and the second distance threshold Dth2 are set to larger values as the vehicle body velocity increases. At a predetermined vehicle body velocity (for example, any one of V1, V2, and V3), the second distance threshold Dth2 is greater than the first distance threshold Dth1. That is, D4 > D1, D5 > D2, and D6 > D3.

The values D1 to D6 in the map are set based on a time to collision (TTC). Here, the TTC refers to a remaining time Tr until a collision when the motorcycle MC and the obstacle ahead maintain respective current speeds thereof. The remaining time Tr is calculated by the following equation (1).

$$Tr = D \div (Vs - Vf) \quad (1)$$

D: a distance between the motorcycle MC and an obstacle in front of the motorcycle MC
Vs: a speed of the motorcycle MC
Vf: a speed of the obstacle ahead

The controller 100 has a function of outputting a request for decelerating the motorcycle MC to the engine ENG when the first condition is satisfied. For example, the controller 100 outputs a request (hereinafter, also referred to as an "FI cut request") for reducing the amount of fuel injection to the engine ENG to a vehicle controller (not illustrated) that controls the engine ENG. For example, the controller 100 outputs a request for stopping fuel injection to the vehicle controller, and the vehicle controller performs control of reducing the opening degree of the throttle valve and stops fuel injection by a fuel injection device. When the fuel injection is stopped, the vehicle is slowly decelerated by engine braking.

The controller 100 has a function of limiting the deceleration of the motorcycle MC in the automatic deceleration control based on the state of the motorcycle MC detected by the IMU 57. Specifically, the controller 100 sets a limit value Dlim of the deceleration of the motorcycle MC based on the state of the motorcycle MC detected by the IMU 57. For example, the controller 100 can determine whether the rear of the motorcycle MC is about to lift based on the state of the motorcycle MC detected by the IMU 57, and when it is determined that the rear of the motorcycle MC is about to lift, the controller 100 sets, as the limit value Dlim, a deceleration having a magnitude such that the rear of the motorcycle MC does not lift.

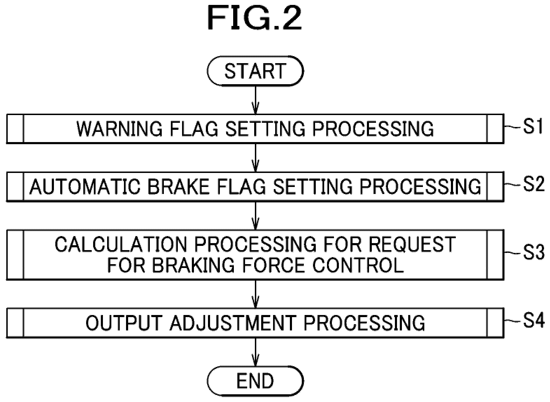

Next, operations of the controller 100 will be described in detail. The controller 100 repeatedly executes processing illustrated in FIG. 2 at all times.

In the processing illustrated in FIG. 2, the controller 100 first executes warning flag setting processing (S1). After step S1, the controller 100 executes automatic brake flag setting processing (S2).

After step S2, the controller 100 executes calculation processing for request for the braking force control (S3). After step S3, the controller 100 executes output adjustment processing (S4), and ends the processing.

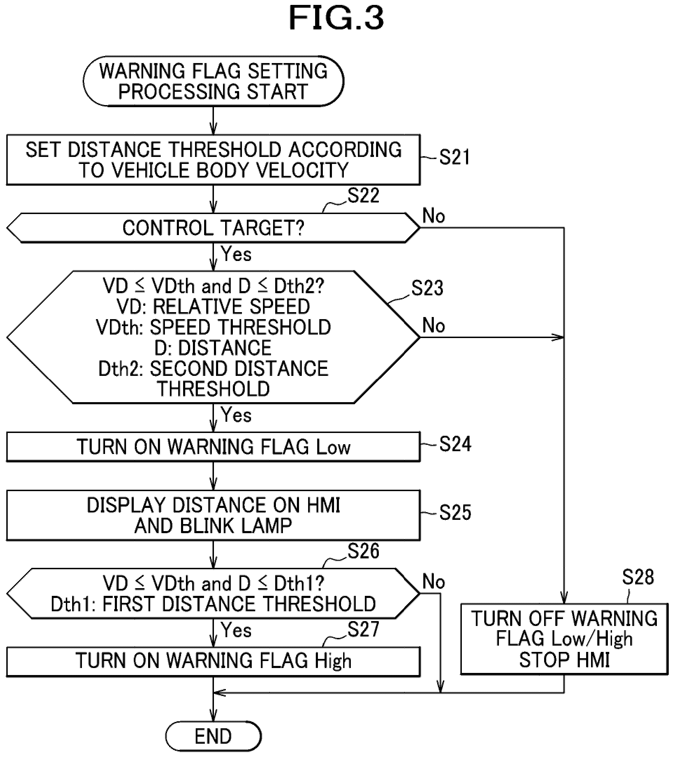

As illustrated in FIG. 3, in the warning flag setting processing, the controller 100 first sets the first distance threshold Dth1 and the second distance threshold Dth2 according to the vehicle body velocity using the map illustrated in FIG. 6 (S21). After step S21, the controller 100 determines, based on image information acquired from the camera 55, whether an object in front of the motorcycle MC is a control target for the automatic deceleration control (S22).

Specifically, for example, when an image acquired from the camera 55 is an image of an upward slope, it is determined that the upward slope is not a control target. When the image acquired from the camera 55 is an automobile or the like, it is determined that the automobile is a control target.

When it is determined in step S22 that the object captured by the camera 55 is a control target (Yes), the controller 100 calculates the distance D and the relative speed VD based on the image information acquired from the camera 55, and determines whether the distance D is equal to or less than the second distance threshold Dth2 and the relative speed VD is equal to or less than the speed threshold VDth (S23). In step S23, when it is determined that D ≤ Dth2 and VD ≤ VDth (Yes), the controller 100 turns on, that is, sets a warning flag Low (S24).

After step S24, the controller 100 displays the distance D on the monitor of the HMI 56 and blinks a lamp of the HMI 56 (S25). After step S25, the controller 100 determines whether the distance D is equal to or less than the first distance threshold Dth1 and the relative speed VD is equal to or less than the speed threshold VDth (S26).

When it is determined in step S26 that D ≤ Dth1 and VD ≤ VDth (Yes), the controller 100 turns on a warning flag High (S27), and ends the processing. When it is determined as No in step S22 or step S23, the controller 100 turns off the warning flag Low and the warning flag High, that is, resets the flags, stops the HMI 56 (S28), and ends the processing. When it is determined as No in step S26, the controller 100 ends the processing while maintaining the warning flag Low.

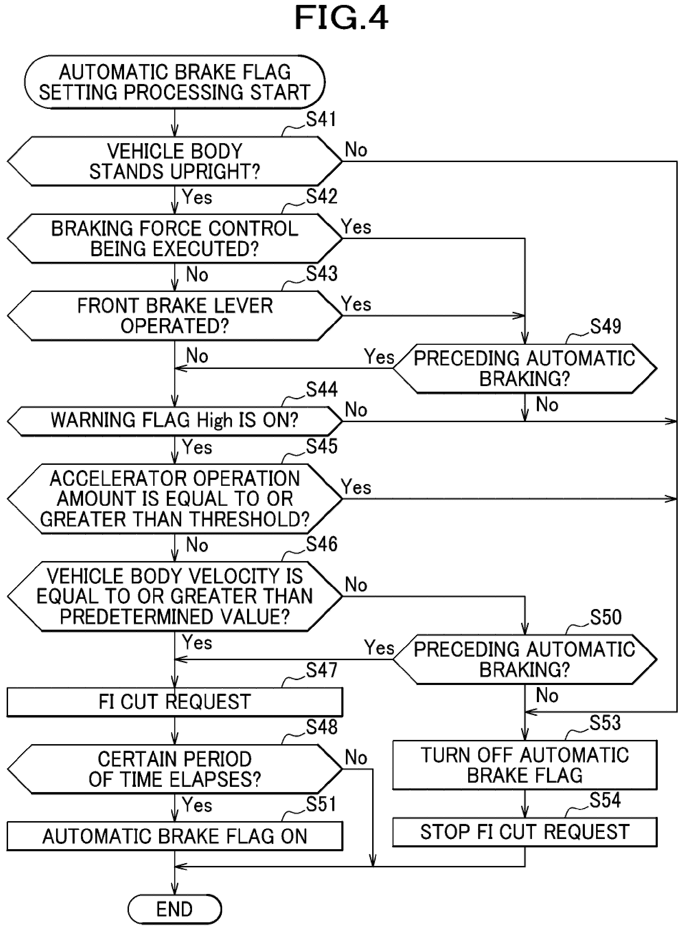

As illustrated in FIG. 4, in the automatic brake flag setting processing, the controller 100 first determines whether the vehicle body is in an upright state based on information from the IMU 57 (S41). When it is determined in step S41 that the vehicle body is in an upright state (Yes), the controller 100 determines whether the braking force control is being performed (S42).

When it is determined in step S42 that the braking force control is not being performed (No), the controller 100 determines whether the front brake lever LF is operated (S43). Whether or not the front brake lever LF is operated can be determined based on information from, for example, the angle sensor that detects the operation angle of the front brake lever LF or a hydraulic pressure sensor that detects a hydraulic pressure in the brake system BF.

When it is determined in step S43 that the front brake lever LF is not operated (No), the controller 100 determines whether the warning flag High is on (S44). When it is determined in step S44 that the warning flag High is on (Yes), the controller 100 determines whether an operation amount of the accelerator AC is equal to or greater than a threshold based on information from the throttle sensor 54 (S45).

Here, the threshold of the operation amount of the accelerator AC is set to, for example, a value close to the maximum value of the operation amount of the accelerator AC.

When it is determined in step S45 that the operation amount of the accelerator AC is not equal to or greater than the threshold (No), the controller 100 determines whether the vehicle body velocity is equal to or greater than a predetermined value (S46). When it is determined in step S46 that the vehicle body velocity is equal to or greater than the predetermined value (Yes), the controller 100 outputs, to the vehicle controller (not illustrated), an FI cut request for reducing the amount of fuel injection to the engine ENG (S47).

After step S47, the controller 100 determines whether a certain period of time elapses since the output of the FI cut request (S48). When it is determined in step S48 that the certain period of time elapses (Yes), the controller 100 turns on an automatic brake flag for executing the automatic deceleration control (hereinafter, also referred to as "automatic braking") (S51), and ends the processing. When it is determined in step S48 that the certain period of time does not elapse (No), the controller 100 ends the processing without turning on the automatic brake flag.

When it is determined as Yes in step S42 or step S43, the controller 100 determines whether preceding automatic braking is being executed (S49). When it is determined in step S49 that the preceding automatic braking is being executed (Yes), the controller 100 proceeds to the processing of step S44 in order to enable the automatic braking to be continued.

When it is determined as No in step S46, the controller 100 determines whether the preceding automatic braking is being executed (S50). When it is determined in step S50 that the preceding automatic braking is being executed (Yes), the controller 100 proceeds to the processing of step S47 in order to enable the automatic braking to be continued.

When it is determined as No in step S41, that is, when the vehicle body is inclined during turning or the like, the controller 100 turns off the automatic brake flag (S53), stops the FI cut request (S54), and ends the processing. Similarly, when it is determined as No in step S44, step S49, or step S50, or when it is determined as Yes in step S45, the controller 100 executes processing of steps S53 and S54, and ends the processing.

Although not illustrated, in the calculation processing for request for the braking force control, the controller 100 determines whether the operation angle θ of the rear brake lever LR acquired from the angle sensor 53 is equal to or greater than the first threshold θth. When it is determined that $θ \geq θth$, the controller 100 determines that there is a request for the braking force control.

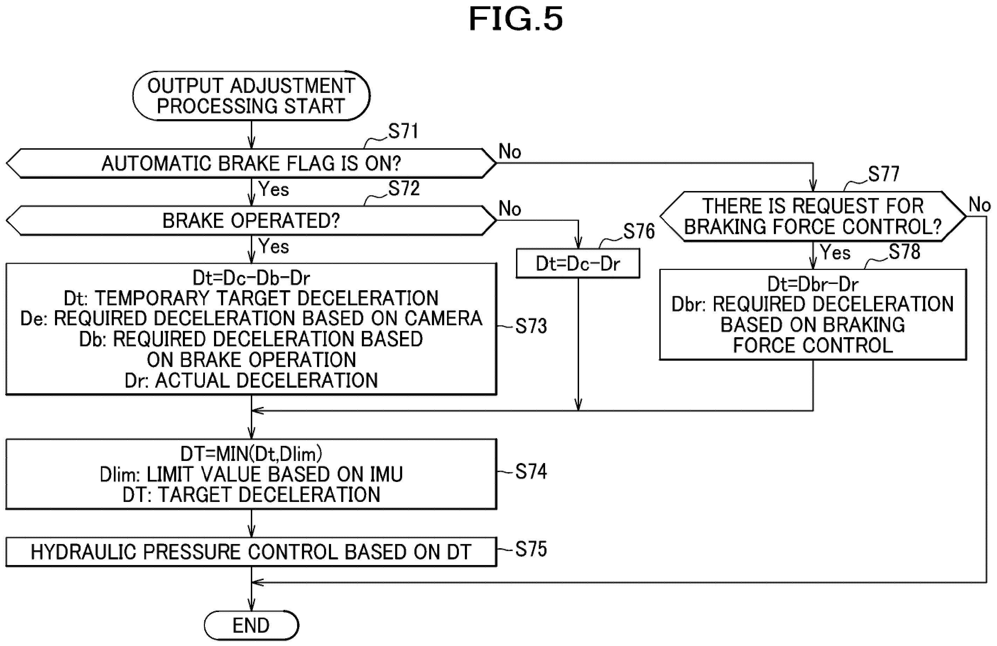

As illustrated in FIG. 5, in the output adjustment processing, the controller 100 first determines whether the automatic brake flag is on (S71). When it is determined in step S71 that the automatic brake flag is on (Yes), the controller 100 determines, based on information from the rear-side angle sensor 53 or the front-side angle sensor (or the hydraulic pressure sensor or the like), whether at least one of the front brake lever LF or the rear brake lever LR is operated (S72).

When it is determined in step S72 that at least one of the brake lever LF or the brake lever LR is operated (Yes), the controller 100 calculates a temporary target deceleration Dt of the motorcycle MC in the automatic braking by the following equation (2) (S73).

$$Dt = Dc - Db - Dr \quad (2)$$

Dc: a required deceleration based on the camera 55
Db: a required deceleration based on a brake operation
Dr: an actual deceleration

Here, the required deceleration Dc based on the camera 55 is set based on image information acquired from the camera 55. Specifically, the required deceleration Dc is a deceleration at which a collision between the motorcycle MC and an obstacle ahead can be avoided, and is set based on, for example, the vehicle body velocity, the relative speed VD, and the distance D.

The required deceleration Db based on a brake operation is set based on an operation amount of the front brake lever LF and an operation amount of the rear brake lever LR. Here, when the operation angle θ of the rear brake lever LR is less than the first threshold θth (when the braking force control is not executed), the required deceleration based on an operation amount of the rear brake lever LR is a deceleration corresponding to a braking force of the mechanical rear brake 20R that increases in proportion to the operation angle θ. When the operation angle θ of the rear brake lever LR is equal to or greater than the first threshold θth (during the braking force control), the required deceleration based on an operation amount of the rear brake lever LR is a deceleration corresponding to both a braking force of the mechanical rear brake 20R and the hydraulic front brake 20F that is increased in pressure in the braking force control.

After step S73, the controller 100 sets the limit value Dlim of the deceleration based on information from the IMU 57, and determines the target deceleration DT of the motorcycle MC in the automatic braking by the following equation (3) (S74).

$$DT = MIN(Dt, Dlim) \quad (3)$$

That is, in step S74, the controller 100 sets, as the target deceleration DT, one of the temporary target deceleration Dt and the limit value Dlim that has a smaller magnitude (absolute value).

After step S74, the controller 100 controls a current flowing through the motor 6 and the pressure regulator 7 based on the target deceleration DT (S75), and ends the processing. Specifically, in step S75, for example, the controller 100 converts the target deceleration DT into a target hydraulic pressure of the front brake 20F, and sets a current value to the motor 6 and a command current value to the pressure regulator 7 so that the hydraulic pressure of the front brake 20F is the target hydraulic pressure.

When it is determined in step S72 that no brake is operated (No), the controller 100 calculates the temporary target deceleration Dt of the motorcycle MC in the automatic braking by the following equation (4) (S76).

$$Dt = Dc - Dr \quad (4)$$

After step S76, the controller 100 proceeds to the processing of step S74.

When it is determined in step S71 that the automatic brake flag is not on (No), the controller 100 determines whether there is a request for the braking force control (S77). When it is determined in step S77 that there is a request for the braking force control (Yes), the controller 100 calculates the temporary target deceleration Dt of the motorcycle MC in the braking force control by the following equation (5) (S78).

$$Dt = Dbr - Dr \quad (5)$$

Dbr: a required deceleration based on braking force control

Here, the required deceleration Dbr based on the braking force control is a deceleration corresponding to both the braking force of the mechanical rear brake 20R and the hydraulic front brake 20F increased in pressure in the braking force control.

After step S78, the controller 100 proceeds to the processing of step S74. When it is determined in step S77 that there is no request for the braking force control (No), the controller 100 skips the processing of steps S74 and S75 and ends the processing.

As described above, the following effects can be obtained according to the embodiment.

Since the automatic braking is executed (S51) on condition that the braking force control is not being executed (S42: No), the motorcycle MC can be appropriately decelerated by the automatic braking that is not affected by the braking force control.

In addition to the case where the braking force control is not being executed, the automatic deceleration control is executed in a case where it is determined whether the front brake lever LF is operated and it is determined that the front brake lever LF is not operated. Thus, the vehicle can be appropriately decelerated by the automatic deceleration control that is not affected by the operation of the front brake lever LF or the braking force control.

Since the controller 100 calculates the actual deceleration Dr based on the wheel speed, the actual deceleration Dr can be calculated from the wheel speed detected by the wheel speed sensor 51.

The controller 100 calculates the distance D between an obstacle in front of the motorcycle MC and the motorcycle MC and the relative speed VD that is a speed of the motorcycle MC with respect to the obstacle, based on image information from the camera 55, and thus it is possible to appropriately execute automatic braking based on the distance D and the relative speed VD.

Since the notification to the driver and the automatic braking are performed stepwise, the motorcycle MC can be decelerated and stopped comfortably and safely by the driver and the vehicle brake control apparatus C.

When the first condition is satisfied, since the deceleration of the motorcycle MC by the engine ENG is performed before executing the automatic braking, it is easy to quickly decelerate the motorcycle MC.

When the state of the motorcycle MC detected by IMU 57 is a state in which the deceleration cannot be made too large, such as a rear lift, the controller 100 limits the deceleration of the motorcycle MC in the automatic braking by the limit value Dlim, so that the rear lift or the like of the motorcycle MC can be restricted.

Since the rear brake 20R is a mechanical brake, for example, the number of components of the vehicle brake control apparatus C can be reduced and the vehicle brake control apparatus C can be miniaturized, as compared with a structure in which both the first brake and the second brake are hydraulic brakes.

In a case where the operation amount of the accelerator AC is equal to or greater than the threshold even if the warning flag High is on, it can be determined that deceleration is not intended by the driver, and thus an operation according to the driver's intention can be performed by not executing the automatic braking.

By performing the processing of step S48, it is possible to unconditionally perform gentle deceleration by engine braking in a certain period of time before executing the automatic braking, and then execute the automatic braking. In the certain period of time before executing the automatic braking, when the warning flag High is turned off due to a change in the conditions of the distance D and the relative speed VD, when there is an operation of the driver, or when there is a system error, the processing can be ended without executing the automatic braking.

The invention is not limited to the above-described embodiment, and can be used in various forms as exemplified below.

Although the first brake is a mechanical brake and the second brake is a hydraulic brake in the above-described embodiment, for example, both the first brake and the second brake may be hydraulic brakes. In this case, the vehicle brake control apparatus may further include a second detection device configured to detect the second operation amount that varies according to the operation of the second brake operating member, and the controller may control the braking force of the first brake based on the second operation amount when the second operation amount is equal to or greater than a second threshold.

According to this configuration, by operating either the first brake operating member or the second brake operating member, both the first brake and the second brake can be operated.

The wheel speed may be detected by a global positioning system (GPS) or the like.

The operation amount may be a parameter that varies according to an operation of a brake operating member, and may be, for example, a hydraulic pressure when the hydraulic pressure varies according to the operation of the brake operating member. In this case, the detection device may be a sensor that detects the hydraulic pressure.

The color of warning light may be changed between when the warning flag Low is on and when the warning flag High is on. Specifically, for example, the warning light may be yellow when the warning flag Low is on, and the warning light may be red when the warning flag High is on.

The external environment information acquisition device may be a distance sensor capable of detecting a distance to an obstacle in front of the vehicle, or the like.

The actual deceleration Dr may be detected by an acceleration sensor or the like.

The first speed threshold and the second speed threshold may be different values. Each of the first speed threshold and the second speed threshold may be set according to the vehicle body velocity.

Although the operation angle θ of the rear brake lever LR is exemplified as the operation amount in the above-described embodiment, the operation amount may be, for example, a stroke amount detected by a stroke sensor configured to detect a stroke of an operating member such as a brake lever or a foot brake, or may be a distance detected by a distance sensor such as an infrared ray sensor configured to detect a distance between an operating member and a support member movably supporting the operating member.

The second brake is not limited to a hydraulic brake, and may be, for example, an electromagnetic brake. The first brake is not limited to a mechanical brake, and may be, for example, an electromagnetic brake or a hydraulic brake. The second brake may be a rear wheel brake, and the first brake may be a front wheel brake.

The vehicle provided with the first brake and the second brake is not limited to the motorcycle MC, and may be any vehicle. For example, the vehicle may be a bar-handle vehicle operated by a bar handle. The bar-handle vehicle may be, for example, a three-wheeled vehicle or a four-wheeled vehicle.

The brake operating member is not limited to a lever, and may be, for example, a foot brake pedal.

The suction valve may be a normally closed solenoid valve.

The drive source may be a motor or the like configured to cause the vehicle to travel.

The elements described in the above-described embodiment and the modification may be combined as desired and implemented.

**Claims**

1. A vehicle brake control apparatus comprising:

   a first brake operating member configured to operate a first brake for braking a first wheel;
   a second brake operating member configured to operate a second brake for braking a second wheel;
   a first detection device configured to detect a first operation amount that varies according to an operation of the first brake operating member;
   an external environment information acquisition device configured to acquire external environment information on surroundings of a vehicle; and
   a controller, wherein
   the controller is configured to execute

braking force control of controlling a braking force of the second brake based on the first operation amount when the first operation amount is equal to or greater than a first threshold, and automatic deceleration control of decelerating the vehicle based on a required deceleration of the vehicle set based on the external environment information and a vehicle deceleration obtained by detection or calculation, and

the controller executes the automatic deceleration control on condition that the braking force control is not being executed.

2. The vehicle brake control apparatus according to claim **1,** wherein
the controller further determines whether the second brake operating member is operated, and executes the automatic deceleration control when it is determined that the second brake operating member is not operated.

3. The vehicle brake control apparatus according to claim 1, wherein
the controller calculates the vehicle deceleration based on a wheel speed.

4. The vehicle brake control apparatus according to claim 1, wherein
the controller

calculates a distance between an obstacle in front of the vehicle and the vehicle and a relative speed, which is a speed of the vehicle with respect to the obstacle, based on the external environment information, and
executes the automatic deceleration control on condition that a first condition that the distance is equal to or less than a first distance threshold and an absolute value of the relative speed is equal to or greater than a first speed threshold is satisfied.

5. The vehicle brake control apparatus according to claim 4, further comprising:

a notification device configured to perform notification of prompting a driver to perform an operation of decelerating the vehicle, wherein
the controller executes the notification by the notification device on condition that a second condition that the distance is equal to or less than a second distance threshold, which is greater than the first distance threshold, and the absolute value of the relative speed is equal to or greater than a second speed threshold is satisfied.

6. The vehicle brake control apparatus according to claim 4, wherein
when the first condition is satisfied, before executing the automatic deceleration control, the controller outputs a request for decelerating the vehicle to a drive source for causing the vehicle to travel.

7. The vehicle brake control apparatus according to claim 1, further comprising:

a vehicle state detection device configured to measure a state of the vehicle including a posture of the vehicle, wherein
the controller limits a deceleration of the vehicle in the automatic deceleration control based on the state of the vehicle detected by the vehicle state detection device.

8. The vehicle brake control apparatus according to claim 5, wherein
the notification device displays the distance and emits light for warning.

9. The vehicle brake control apparatus according to claim 1, wherein

the first brake is a mechanical brake mechanically connected to the first brake operating member, and
the second brake is a hydraulic brake that generates a braking force by a hydraulic pressure.

# FIG.1

# FIG.2

START

| WARNING FLAG SETTING PROCESSING | S1 |

| AUTOMATIC BRAKE FLAG SETTING PROCESSING | S2 |

| CALCULATION PROCESSING FOR REQUEST FOR BRAKING FORCE CONTROL | S3 |

| OUTPUT ADJUSTMENT PROCESSING | S4 |

END

# FIG.3

WARNING FLAG SETTING
PROCESSING START

SET DISTANCE THRESHOLD ACCORDING
TO VEHICLE BODY VELOCITY — S21

CONTROL TARGET? — S22    No

Yes

$VD \leq VDth$ and $D \leq Dth2$?    S23
VD: RELATIVE SPEED
VDth: SPEED THRESHOLD    No
D: DISTANCE
Dth2: SECOND DISTANCE
THRESHOLD

Yes

TURN ON WARNING FLAG Low — S24

DISPLAY DISTANCE ON HMI
AND BLINK LAMP — S25

$VD \leq VDth$ and $D \leq Dth1$?    S26    No
Dth1: FIRST DISTANCE THRESHOLD

Yes    S27

TURN ON WARNING FLAG High

S28

TURN OFF WARNING
FLAG Low/High
STOP HMI

END

# FIG.4

AUTOMATIC BRAKE FLAG
SETTING PROCESSING START

S41 · VEHICLE BODY STANDS UPRIGHT? — No

Yes

S42 · BRAKING FORCE CONTROL BEING EXECUTED? — Yes

No

S43 · FRONT BRAKE LEVER OPERATED? — Yes

No

S49 · PRECEDING AUTOMATIC BRAKING? — Yes

No

S44 · WARNING FLAG High IS ON? — No

Yes

S45 · ACCELERATOR OPERATION AMOUNT IS EQUAL TO OR GREATER THAN THRESHOLD? — Yes

No

S46 · VEHICLE BODY VELOCITY IS EQUAL TO OR GREATER THAN PREDETERMINED VALUE? — No

Yes

S50 · PRECEDING AUTOMATIC BRAKING? — Yes

No

S47 · FI CUT REQUEST

S48 · CERTAIN PERIOD OF TIME ELAPSES? — No

Yes

S53 · TURN OFF AUTOMATIC BRAKE FLAG

S51 · AUTOMATIC BRAKE FLAG ON

S54 · STOP FI CUT REQUEST

END

# FIG.5

OUTPUT ADJUSTMENT PROCESSING START

S71 — AUTOMATIC BRAKE FLAG IS ON? — No → S77 THERE IS REQUEST FOR BRAKING FORCE CONTROL? — No → END

Yes

S72 — BRAKE OPERATED? — No → S76 $Dt=Dc-Dr$

Yes

S73
$Dt=Dc-Db-Dr$
Dt: TEMPORARY TARGET DECELERATION
De: REQUIRED DECELERATION BASED ON CAMERA
Db: REQUIRED DECELERATION BASED ON BRAKE OPERATION
Dr: ACTUAL DECELERATION

S78
$Dt=Dbr-Dr$
Dbr: REQUIRED DECELERATION BASED ON BRAKING FORCE CONTROL

(Yes from S77)

S74
$DT=MIN(Dt,Dlim)$
Dlim: LIMIT VALUE BASED ON IMU
DT: TARGET DECELERATION

S75
HYDRAULIC PRESSURE CONTROL BASED ON DT

END

EP 4 617 160 A1

# FIG.6

| VEHICLE BODY VELOCITY [km/h] | 0 | V1 | V2 | V3 |
|---|---|---|---|---|
| Dth2 | 0 | D4 | D5 | D6 |
| Dth1 | 0 | D1 | D2 | D3 |

## INTERNATIONAL SEARCH REPORT

| International application No. |
|---|
| **PCT/JP2023/026514** |

**A. CLASSIFICATION OF SUBJECT MATTER**

***B62L 3/08***(2006.01)i; ***B60T 7/12***(2006.01)i; ***B60T 8/17***(2006.01)i
FI: B60T7/12 C; B60T8/17 B; B62L3/08

According to International Patent Classification (IPC) or to both national classification and IPC

**B. FIELDS SEARCHED**

Minimum documentation searched (classification system followed by classification symbols)

B62L3/08; B60T7/12; B60T8/17

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-134991 A (ROBERT BOSCH GMBH) 30 August 2018 (2018-08-30)<br>paragraph [0063] | 1-9 |
| A | WO 2019/131504 A1 (HONDA MOTOR CO LTD) 04 July 2019 (2019-07-04)<br>fig. 5 | 1-9 |
| A | WO 2020/026678 A1 (NISSIN KOGYO CO., LTD.) 06 February 2020 (2020-02-06)<br>entire text, all drawings | 1-9 |
| A | WO 2022/025095 A1 (HITACHI ASTEMO, LTD.) 03 February 2022 (2022-02-03)<br>entire text, all drawings | 1-9 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/026514**

| Patent document cited in search report | | | Publication date (day/month/year) | Patent family member(s) | | | Publication date (day/month/year) |
|---|---|---|---|---|---|---|---|
| JP | 2018-134991 | A | 30 August 2018 | US paragraph [0066] | 2020/0017085 | A1 | |
| WO | 2019/131504 | A1 | 04 July 2019 | US fig. 5 | 2020/0391732 | A1 | |
| | | | | CN | 111527295 | A | |
| WO | 2020/026678 | A1 | 06 February 2020 | EP entire text, all drawings | 3831699 | A1 | |
| WO | 2022/025095 | A1 | 03 February 2022 | (Family: none) | | | |

Form PCT/ISA/210 (patent family annex) (January 2015)

**EP 4 617 160 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6817417 B
- JP 6850863 B
- WO 2020026678 A
- WO 2022025095 A